# EUROPÄISCHE PATENTSCHRIFT

(11) **EP 2 783 947 B1**
(45) Veröffentlichungstag und Bekanntmachung des Hinweises auf die Patenterteilung: **30.12.2015**
(21) Anmeldenummer: 14000535.6
(22) Anmeldetag: 14.02.2014
(51) Int. Cl.: B62D 17/00, B60G 7/02

(54) **Einstelleinrichtung zur Einstellung eines Radlenkers oder einer Spurstange an einem Kraftfahrzeug, sowie Achsträger mit wenigstens einer solchen Einstelleinrichtung**
Setting device for adjusting a steering arm or a tie rod on a motor vehicle, and axle support with at least one such adjustment device
Dispositif de réglage pour le réglage d'un bras de roue ou d'une barre d'accouplement sur un véhicule automobile et support d'essieu doté d'au moins un tel dispositif de réglage

(30) Priorität: 27.03.2013 DE 102013005292
(43) Veröffentlichungstag der Anmeldung: 01.10.2014
(73) Patentinhaber: Audi AG, 85045 Ingolstadt (DE)
(72) Erfinder: Mohrlock, Dominik, 85114 Buxheim (DE); Leibl, Peter, DE - 85077 Manching (DE)

(56) Entgegenhaltungen:
- EP-A1- 1 711 393
- AU-A- 4 481 679
- DE-B3- 10 231 377
- DE-C2- 3 336 922
- FR-A- 1 554 338
- US-A- 4 267 896
- US-A1- 2005 146 105

## Beschreibung

Die Erfindung betrifft eine Einstelleinrichtung zur Einstellung eines Radlenkers oder einer Spurstange an einem Kraftfahrzeug, gemäß der im Oberbegriff des Anspruchs 1 näher angegebenen Art.

Die Erfindung betrifft ferner einen Achsträger, insbesondere für einen Personenkraftwagen, der wenigstens eine solche Einstelleinrichtung aufweist. Zum Stand der Technik wird auf die Patentschriften DE 102 31 377 B3, DE 33 36 922 C2 und DE 1 555 216 B verwiesen, aus denen Einstelleinrichtungen bekannt sind, bei denen der einstellbare Radlenker mit einem Schraubbolzen zwischen zwei beabstandeten und mit Langlöchern ausgebildeten Aufnahmeschenkeln (bzw. Lagerarmen oder Lagerböcken) angebunden ist. An den Aufnahmeschenkeln befinden sich beidseitig der Langlöcher zueinander beabstandete parallele Führungen, zwischen denen jeweils eine drehfest bzw. undrehbar mit dem Schraubbolzen verbundene Exzenterscheibe passgenau einsitzt. Zur Einstellung des Radlenkers kann der Schraubbolzen (nach Lockern einer Kontermutter oder dergleichen) durch Verdrehen innerhalb der Langlöcher verschoben bzw. verstellt werden. Solche Einstelleinrichtungen eignen sich insbesondere für Mehrlenkerachsen.

Problematisch ist, dass die Exzenterscheiben bei der Erstmontage oder bei einer Reparatur genau zwischen den Führungen positioniert werden müssen. Die Montage erfolgt in der Regel manuell durch einen Werker. Dies wird häufig dadurch erschwert, dass der Montagebereich vom Werker nicht oder nur schlecht einsehbar ist. Wird der Schraubbolzen trotz einer falsch sitzenden Exzenterscheibe angezogen (durch Festschrauben einer Kontermutter oder dergleichen) können Funktionsbeeinträchtigungen und sogar irreparable Beschädigungen an den Führungen die Folge sein.

Der Erfindung liegt die Aufgabe zugrunde eine Einstelleinrichtung der vorausgehend beschriebenen Art anzugeben, die eine einfache und fehlerfreie Montage ermöglicht.

Die Aufgabe wird gelöst durch eine erfindungsgemäße Einstelleinrichtung mit den Merkmalen des Anspruchs 1. Mit dem nebengeordneten Anspruch erstreckt sich die Lösung der Aufgabe auch auf einen erfindungsgemäßen Achsträger für ein Kraftfahrzeug. Bevorzugte Weiterbildungen und Ausgestaltungen ergeben sich analog für beide Erfindungsgegenstände sowohl aus den abhängigen Ansprüchen als auch aus den nachfolgenden Erläuterungen.

Eine erfindungsgemäße Einstelleinrichtung zeichnet sich gegenüber den aus dem Stand der Technik vorbekannten Einrichtungen dadurch aus, dass die parallelen Führungen wenigstens eines Führungspaars mit rampenartigen Einführschrägen ausgebildet sind, auf denen die betreffende Exzenterscheibe beim Festschrauben des Schraubbolzens abgleiten kann und somit exakt zwischen den parallelen Führungen positioniert wird.

Zum Verständnis der Erfindung wird ausdrücklich auch auf den eingangs genannten Stand der Technik hingewiesen.

Bevorzugt ist vorgesehen, dass die sich in Höhenrichtung zwischen den unteren Führungskanten und den oberen Führungskanten erstreckenden Einführschrägen über die gesamte Länge der Führungen ausgebildet sind. Bevorzugt weisen beide Führungen solche Einführschrägen auf, die unterschiedlich oder identisch ausgebildet sein können. Insbesondere beginnen die Einführschrägen in den oberen Bereichen an den Führungen, wobei die Einführschrägen an den gegenüberliegenden Führungen einander zugewandt sind, vorzugsweise derart, dass sich zwischen den korrespondierenden Einführschrägen nach unten eine keilförmige bzw. trichterförmige Verjüngung bzw. Verengung ergibt (die oben weiter und unten schmaler ist). Diese konische Verjüngung führt dazu, dass die zwischen den Führungen aufzunehmende Exzenterscheibe beim Anziehen bzw. Festschrauben des Schraubbolzens von allein im unteren Bereich exakt zwischen den Führungen zur Anlage kommt. Die Richtungsangabe "unten" bezieht sich auf die Position der Exzenterscheibe zwischen den Führungen im festgeschraubten Zustand. Hierauf bezieht sich entsprechend auch die Richtungsangabe "oben".

Die erfindungsgemäße Einstelleinrichtung ermöglicht eine einfache und fehlerfreie Montage und ist gleichermaßen für unterschiedliche Radlenker (bspw. Spurlenker, Querlenker, Sturzlenker und dergleichen) und Spurstangen geeignet. Durch die rampenartigen Einführschrägen an den Führungen für die Exzenterscheibe wird eine Beschädigung der Führungen beim Montieren verhindert, wodurch Nacharbeit und Ausschuss vermieden und eine hohe Prozesssicherheit erreicht wird. Ferner kann die Fertigungszeit reduziert werden. Zudem ermöglicht die erfindungsgemäße Einstelleinrichtung auch eine einfache manuelle Montage in nicht oder nur schwer einsehbaren und/oder zugänglichen Bereichen. Außerdem wird eine genaue bzw. exakte Positionierung der Exzenterscheibe zwischen den Führungen ermöglicht, wodurch in der Folge eine sichere und zuverlässige Einstellbarkeit der Fahrzeugachse gewährleistet ist. Dies ist keine abschließende Aufzählung von Vorteilen.

Bevorzugt ist vorgesehen, dass die Einführschrägen mit einem Neigungswinkel im Bereich von 30° bis 70°, bevorzugt im Bereich von 40° bis 60° und insbesondere im Bereich von 45° bis 55° ausgebildet sind. Die Winkelangabe bezieht sich auf die Anlagefläche für die Exzenterscheibe zwischen den Führungen.

Besonders bevorzugt ist vorgesehen, dass die Führungen im oberen Bereich mit den rampenartigen, insbesondere nach unten aufeinander zulaufenden, Einführschrägen und im unteren Bereich mit zueinander parallelen Führungsflächen (zur Führung der Exzenterscheibe) ausgebildet sind. Die Einführschrägen dienen somit dazu, die Exzenterscheibe beim Festschrauben exakt im nutartigen Führungsbereich zwischen den zueinander beabstandeten Führungen zu positionieren. Die Einführschrägen haben bei der Einstellung durch Verdrehen des Schraubbolzens keine Funktion. Ferner ist bevorzugt vorgesehen, dass die Höhe der Führungsflächen an den Führungen in etwa der Dicke der Exzenterscheibe entspricht. Dadurch kann bei der Einstellung eine optimale Kraftübertragung zwischen der Exzenterscheibe und den Führungen gewährleistet werden. Niedrigere Führungsflächen (bezogen auf die Dicke der Exzenterscheibe) könnten bspw. unzulässig hohe Flächenpressungen verursachen. Höhere Führungsflächen würden unnötiger Weise Bauraum beanspruchen.

Gemäß einer bevorzugten Weiterbildung ist vorgesehen, dass die Aufnahmeschenkel, zwischen denen der Radlenker oder die Spurstange mit Hilfe des Schraubbolzens angebunden wird, aus einem Blechmaterial gebildet sind und dass die daran befindlichen Führungen einschließlich der Einführschrägen durch Umformung des Blechmaterials hergestellt sind. Insbesondere handelt es sich bei den Führungen um Ausstellungen, derart, dass die Führungen durch Einschneiden des Blechmaterials und Ausformen von Laschen bzw. Zungen hergestellt sind. Bevorzugt sind die Laschen, d. h. die laschen- bzw. zungenartigen Führungen, spiegelsymmetrisch ausgebildet und in entgegengesetzte Richtungen gebogen. Die Laschen können eine bogenförmige und insbesondere halbkreisförmige Kontur aufweisen. Bevorzugt sind die Aufnahmeschenkel mit einer Blechdicke im Bereich von 1,5 mm bis 3,0 mm ausgebildet. Insbesondere handelt es sich um ein Stahlblechmaterial (Stahlblech).

Ein erfindungsgemäßer Achsträger umfasst wenigstens eine erfindungsgemäße Einstelleinrichtung. Insbesondere handelt es sich um einen Achsträger für einen Personenkraftwagen (PKW), vorzugsweise um eine Mehrlenkerachse und besonders bevorzugt um eine Hinterachse bzw. einen Hinterachsträger.

Die Erfindung wird nachfolgend beispielhaft und in nicht einschränkender Weise anhand der Figuren näher erläutert. Die in den Figuren gezeigten und/oder nachfolgend erläuterten Merkmale können jedoch, unabhängig von konkreten Merkmalskombinationen, allgemeine Merkmale der Erfindung sein.
- Fig. 1: zeigt in einer perspektivischen Ansicht einen Hinterachsträger für einen Personenkraftwagen.
- Fig. 2: zeigt in einer perspektivischen Seiteansicht eine Anbindungsstelle für eine Spurstange am Achsträger der Fig. 1.
- Fig. 3: zeigt in zwei Einzeldarstellungen die Einstelleinrichtung zur Einstellung der an der Anbindungsstelle gemäß Fig. 2 angebundenen Spurstange.

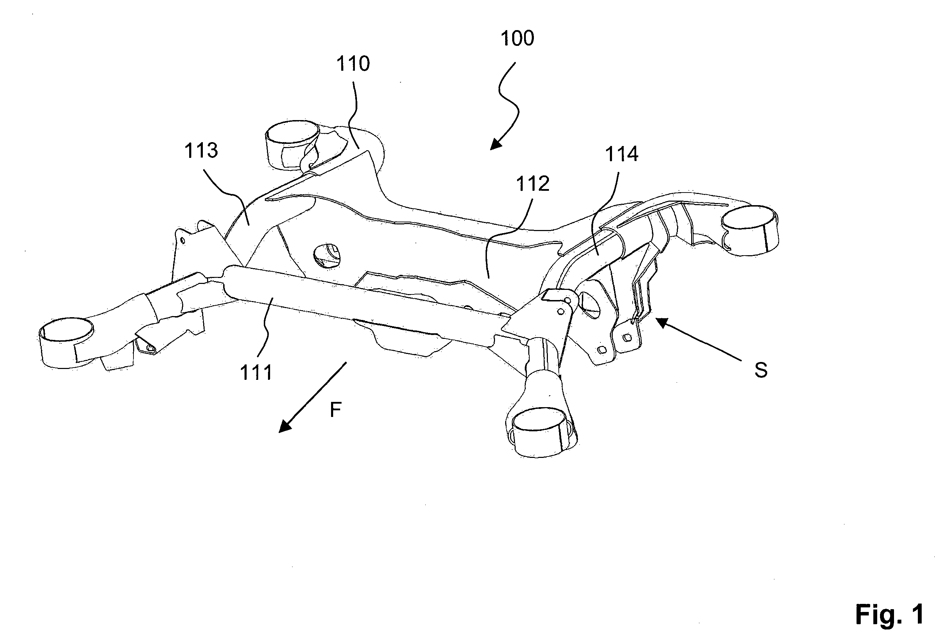

Fig. 1 zeigt einen Achsträger bzw. eine Achskonstruktion 100 für eine Hinterachse eines Personenkraftwagens. Der Achsträger 100 besteht aus mehreren Querträgern 111/112 und Längsträgern 113/114, die zu einem Rahmen 110 gefügt sind. Die Vorwärtsfahrtrichtung ist mit F angegeben. An jeder Seite des Rahmens 110 werden mehrere Radlenker und eine Spurstange angebunden (so genannte Mehrlenkerachse). Die Anbindungsstelle für die linke Spurstange ist mit S gekennzeichnet.

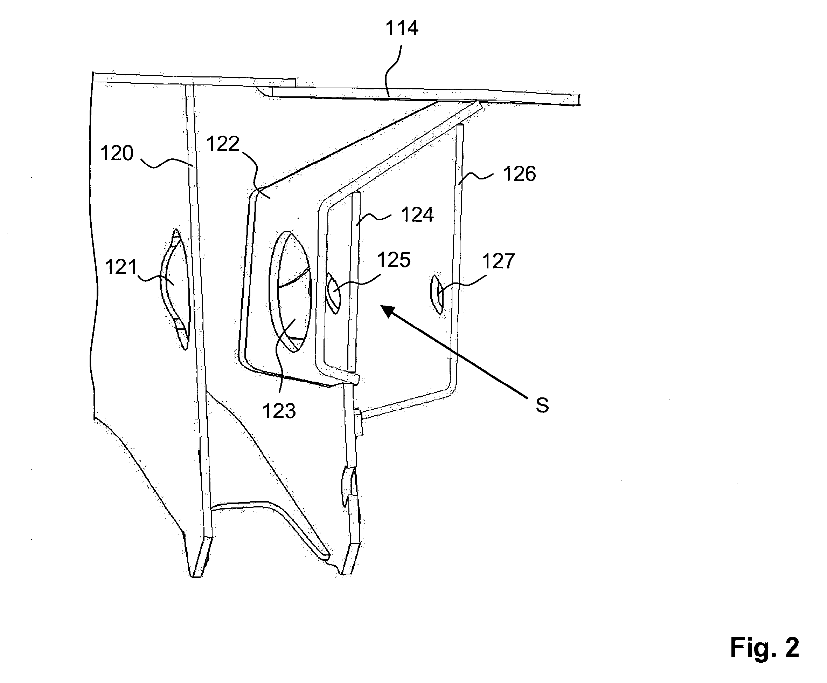

Fig. 2 zeigt die Anbindungsstelle für die linke Spurstange. Das innere Spurstangenlager wird zwischen den aus Blechmaterial gebildeten Aufnahmeschenkeln 124 und 126 angeordnet und mit einem Schraubbolzen durch die Langlöcher 125 und 127 hindurch verschraubt. Um die montierte Spurstange einstellen zu können, ist eine baulich integrierte Einstelleinrichtung vorgesehen, wozu an beiden Aufnahmeschenkeln 124 und 126 des Achsträgers 100 jeweils an der Außenseite (gemäß Darstellung linksseitig am vorderen bzw. linken Aufnahmeschenkel 124 und rechtsseitig am hinteren bzw. rechten Aufnahmeschenkel 126) beidseitig der Langlöcher 125 und 127 jeweils zwei zueinander beabstandete parallele Führungen ausgebildet sind (in Fig. 2 nicht dargestellt), zwischen denen jeweils eine drehfest mit dem Schraubbolzen verbundene Exzenterscheibe derart einsitzt, dass der Schraubbolzen durch Verdrehen unter Mitnahme der Spurstange in den Langlöchern 125 und 127 verstellt bzw. verschoben werden kann, was als solches aus dem eingangs benannten Stand der Technik bekannt ist. (Die Gesamtheit aus Schraubbolzen und drehfest damit verbundenen Exzenterscheiben kann auch als Exzenterschraube bezeichnet werden.)

Sowohl die Montage als auch die nachfolgende Einstellung der Spurstange werden jedoch dadurch erschwert, dass von vorne (bzw. gemäß Darstellung von links) die Zugänglichkeit nur durch die Ausnehmungen 121 und 123 in den Blechen 120 und 122 möglich ist.

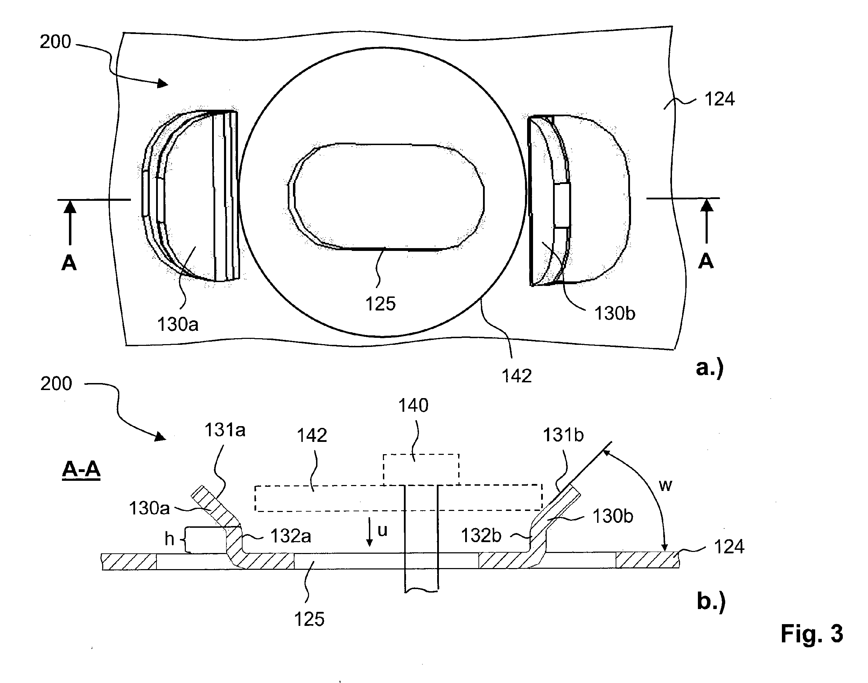

Um eine einfache und fehlerfreie Montage der Spurstange zu ermöglichen wird erfindungsgemäß vorgeschlagen, dass die Führungen für die Exzenterscheiben mit rampenartigen Einführschrägen ausgebildet sind, auf denen die jeweilige Exzenterscheibe beim Festschrauben des Schraubbolzens abgleiten kann, so dass die Exzenterscheiben exakt zwischen den parallelen Führungen positioniert werden. Dies wird nachfolgend anhand der Fig. 3 erläutert.

Fig. 3a zeigt in einer Draufsicht auf den vorderen Aufnahmeschenkel 124 (Blickrichtung gemäß Darstellung in Fig. 2 von links) die parallelen und zueinander beabstandeten Führungen 130a und 130b, zwischen denen die nur schematisch dargestellte erste (bzw. vordere) Exzenterscheibe 142 positioniert ist. Die Führungen 130a/130b sind symmetrisch (genau genommen spiegelsymmetrisch) ausgebildet. Die insgesamt mit 200 bezeichnete Einstelleinrichtung umfasst zumindest die Aufnahmeschenkel 124/126, die daran ausgebildeten Führungen 130a/130b und die Exzenterschraube (Schraubbolzen + Exzenterscheiben) 140/142.

Die Führungen 130a/130b bilden zwischen sich eine Führungsnut aus, in der die Exzenterscheibe 142 exakt einsitzt. Die Exzenterscheibe 142 weist eine außermittige Bohrung auf, durch die der Schraubbolzen 140 hindurchgeführt ist (siehe Fig. 3b). Die drehfeste Verbindung zwischen dem Schraubbolzen 140 und der Exzenterscheibe 142 erfolgt bspw. durch eine Keilnut (oder dergleichen).

Die Führungen am hinteren Aufnahmeschenkel 126 sind identisch ausgebildet. Die zwischen diesen Führungen einsitzende zweite (bzw. hintere) Exzenterscheibe ist ebenfalls drehfest mit dem Schraubbolzen 140 verbunden, so dass beide Exzenterscheiben beim Verdrehen des Schraubbolzens 140 eine synchrone Bewegung ausführen.

In der Schnittdarstellung der Fig. 3b sind die rampenartigen Einführschrägen 131a und 131b an den Führungen 130a und 130b sehr gut zu erkennen. Die Führungen 130a/130b sind nur im oberen Bereich mit den rampenartigen Einführschrägen 131 a/131 b ausgebildet und weisen im unteren Bereich zueinander parallele Führungsflächen 132a und 132b auf, die zwischen sich eine Führungsnut zur Aufnahme der Exzenterscheibe 142 begrenzen. Die Einführschrägen 131a/131b sind beispielhaft mit einem Neigungswinkel w von ca. 45° ausgebildet (die Winkelangabe bezieht sich auf die Anlagefläche für die Exzenterscheibe 142 zwischen den Führungen 130a/130b). Die Höhe h der Führungsflächen 132a und 132b entspricht in etwa der Dicke der Exzenterscheibe 142.

Die korrespondierenden Einführschrägen 131a/131b an den Führungen 130a/130b bilden nach unten (die Richtung "nach unten" ist durch den Pfeil u veranschaulicht) eine keilförmige bzw. trichterförmige Verjüngung. Beim Festschrauben durch Anziehen des Schraubbolzens 140 kann die Exzenterscheibe 142 auf den Einführschrägen 131a und/oder 131b abgleiten und wird hierdurch schließlich genau zwischen den Führungsflächen 132a/132b positioniert. (Dies gilt gleichermaßen auch für die zweite Exzenterscheibe am hinteren Aufnahmeschenkel 126). Dadurch gestaltet sich die manuelle Montage trotz der schlechten Einsehbarkeit und Zugänglichkeit verhältnismäßig einfach. Ferner werden Beschädigungen an den Führungen 130a/130b und insbesondere an den zueinander parallelen Führungsflächen 132a/132b vermieden.

Die Führungen 130a/130b sind durch umformtechnische Herstellung einstückig mit den Aufnahmeschenkeln 124/126 des Rahmens 110 ausgebildet. Hierzu wird das Blechmaterial der Aufnahmeschenkel 124/126 mit bogenförmiger bzw. halbkreisförmiger Kontur (siehe Fig. 3a) eingeschnitten und durch Umformung ausgestellt, wobei die zungenartigen bzw. laschenartigen Führungen 130a/130b, einschließlich der daran befindlichen Einführschrägen 131a/131b, ausgeformt werden. Die laschenartigen Führungen 130a/130b sind spiegelsymmetrisch ausgebildet und in entgegengesetzte Richtungen gebogen (siehe Fig. 3b). Die bogenförmige bzw. halbkreisförmige Schnittführung im Blechmaterial verhindert ungünstige Spannungszustände. Ferner weisen die Einführschrägen 131a/131b aufgrund der bogenförmigen bzw. halbkreisförmigen Schnittführung kreissegmentförmige bzw. halbkreisförmige Flächen auf, so dass die Einführschrägen 131a/131b in der Mitte der Führungen 130a/130b länger ausgebildet sind als in den Randbereichen (siehe Fig. 3a).

Die vorausgehenden Erläuterungen beziehen sich beispielhaft auf eine Einstelleinrichtung 200 für eine Spurstange, wobei der Achsträger 100 in analoger Weise ausgebildete Einstelleinrichtungen für Radlenker aufweisen kann.

## Patentansprüche

1. Einstelleinrichtung (200) zur Einstellung eines Radlenkers oder einer Spurstange an einem Kraftfahrzeug, wobei der Radlenker oder die Spurstange mit einem Schraubbolzen (140) zwischen zwei beabstandeten und mit Langlöchern (125, 127) ausgebildeten Aufnahmeschenkeln (124, 126) angebunden ist und an wenigstens einem der Aufnahmeschenkel (124; 126) beidseitig des Langlochs (125; 127) zwei zueinander beabstandete parallele Führungen (130a, 130b) ausgebildet sind, zwischen denen eine drehfest mit dem Schraubbolzen (140) verbundene Exzenterscheibe (142) derart einsitzt, dass der Schraubbolzen (140) durch Verdrehen unter Mitnahme des Radlenkers oder der Spurstange im Langloch (125; 127) verschoben werden kann,
**dadurch gekennzeichnet, dass**
die parallelen Führungen (130a, 130b) mit rampenartigen Einführschrägen (131a, 131b) ausgebildet sind, auf denen die Exzenterscheibe (142) beim Festschrauben des Schraubbolzens (140) abgleiten kann, wodurch die Exzenterscheibe (142) exakt zwischen den parallelen Führungen (130a, 130b) positioniert wird.

2. Einstelleinrichtung (200) nach Anspruch 1, **dadurch gekennzeichnet, dass** die Einführschrägen (131a, 131b) mit einem Neigungswinkel (w) im Bereich von 30° bis 70° und bevorzugt im Bereich von 40° bis 60° ausgebildet sind.

3. Einstelleinrichtung (200) nach Anspruch 1 oder 2, **dadurch gekennzeichnet, dass** die Führungen (130a, 130b) im oberen Bereich mit den rampenartigen Einführschrägen (131a, 131b) und im unteren Bereich mit zueinander parallelen Führungsflächen (132a, 132b) ausgebildet sind.

4. Einstelleinrichtung (200) nach Anspruch 3, **dadurch gekennzeichnet, dass** die Höhe (h) der Führungsflächen (132a, 132b) an den Führungen (130a, 130b) in etwa der Dicke der Exzenterscheibe (142) entspricht.

5. Einstelleinrichtung (200) nach einem der vorausgehenden Ansprüche, **dadurch gekennzeichnet, dass** die Aufnahmeschenkel (124, 126) aus einem Blechmaterial gebildet sind und dass die Führungen (130a, 130b) einschließlich der daran ausgebildeten Einführschrägen (131a, 131 b) durch Umformung des Blechmaterials hergestellt sind.

6. Einstelleinrichtung (200) nach Anspruch 5, **dadurch gekennzeichnet, dass** die Führungen (130a, 130b) durch Einschneiden des Blechmaterials und Ausformen von Laschen hergestellt sind.

7. Einstelleinrichtung (200) nach Anspruch 5 oder 6, **dadurch gekennzeichnet, dass** die Laschen (130a, 130b) spiegelsymmetrisch ausgebildet und in entgegengesetzte Richtungen gebogen sind.

8. Einstelleinrichtung (200) nach Anspruch 5, 6 oder 7, **dadurch gekennzeichnet, dass** die Laschen (130a, 130b) eine bogenförmige und insbesondere halbkreisförmige Kontur aufweisen.

9. Einstelleinrichtung (200) nach Anspruch 5, 6, 7 oder 8, **dadurch gekennzeichnet, dass** die Aufnahmeschenkel (124, 126) mit einer Blechdicke im Bereich von 1,5 mm bis 3,0 mm ausgebildet sind.

10. Achsträger (100) für ein Kraftfahrzeug, insbesondere für einen Personenkraftwagen, umfassend wenigstens eine Einstelleinrichtung (200) gemäß einem der vorausgehenden Ansprüche.

## Claims

1. An adjustment device (200) for the adjustment of a guide rail or a tie rod on a motor vehicle, wherein the guide rail or the tie rod is fastened with a stud bolt (140) between two receiving limbs (124, 126) spaced apart and designed with elongated holes (125, 127) and on at least one of the receiving limbs (124, 126) on both sides of the elongated hole (125, 127) two parallel guides (130a, 130b) spaced apart from each other are formed, between which a torque-proof eccentric disk (142) connected to the stud bolt (140) is seated in such a manner that by twisting the stud bolt (140) can be moved by pulling the guide rail or the tie rod in the elongated hole (125, 127). **characterized in that**
the parallel guides (130a, 130b) are formed with ramp-like lead-in chamfers (131a, 131b), on which the eccentric disk (142) can slide during the screwing down of the stud bolt (140), whereby the eccentric disk (142) is positioned exactly between the parallel guides (130a, 130b).

2. An adjustment device (200) according to claim 1, **characterized in that** the lead-in chamfers (131a, 131b) are formed with an angle of inclination (w) in the range of 30° to 70° and preferably in the range of 40° to 60°.

3. An adjustment device (200) according to claim 1 or 2, **characterized in that** the guides (130a, 130b) are formed in the upper area with the ramp-like lead-in chamfers (131 a, 131b) and in the lower area with guide surfaces (132a, 132b) parallel to each other.

4. An adjustment device (200) according to claim 3, **characterized in that** the height (h) of the guide surfaces (132a, 132b) on the guides (130a, 130b) corresponds approximately to the thickness of the eccentric disk (142).

5. An adjustment device (200) according to one of the preceding claims, **characterized in that** the receiving limbs (124, 126) are formed from a sheet material and that the guides (130a, 130b) including the lead-in chamfers (131a, 131b) formed thereon are produced by reshaping the sheet material.

6. An adjustment device (200) according to claim 5, **characterized in that** the guides (130a, 130b) are produced by cutting into the sheet material and the shaping of tabs.

7. An adjustment device (200) according to claim 5 or 6, **characterized in that** the tabs (130a, 130b) are formed mirror-symmetrically and are bent in opposite directions.

8. An adjustment device (200) according to claim 5, 6, or 7, **characterized in that** the tabs (130a, 130b) have an arched and, in particular, semicircular contour.

9. An adjustment device (200) according to claim 5, 6, 7 or 8, **characterized in that** the receiving limbs (124, 126) are formed with a sheet thickness in the range of 1.5 mm to 3.0 mm.

10. Cross member (100) for a motor vehicle, in particular, for a passenger car, comprising at least one adjustment device (200) according to the previous claims.

## Revendications

1. Dispositif de réglage (200) pour le réglage d'un bras de roue ou d'une barre d'accouplement d'un véhicule automobile, le bras de roue ou la barre d'accouplement étant relié avec un boulon fileté (140) entre deux branches de réception (124, 126) distantes l'une de l'autre et conçues avec des trous oblongs (125, 127) et deux guides (130a, 130b) parallèles et distants l'un de l'autre étant conçus sur au moins l'une des branches de réception (124 ; 126) des deux côtés du trou oblong (125 ; 127), guides entre lesquels un disque excentrique (142) relié solidaire en rotation avec le boulon fileté (140) est placé de telle sorte que le boulon fileté (140) peut être déplacé dans le trou oblong (125 ; 127) par rotation avec entraînement du bras de roue ou de la barre d'accouplement,
**caractérisé en ce que** les guides parallèles (130a, 130b) sont conçus avec des biseaux d'introduction (131a, 131b), à la manière de rampes, sur lesquels le disque excentrique (142) peut glisser lors du serrage du boulon fileté (140), le disque excentrique (142) étant ainsi positionné exactement entre les guides parallèles (130a, 130b).

2. Dispositif de réglage (200) selon la revendication 1, **caractérisé en ce que** les biseaux d'introduction (131a, 131b) sont conçus avec un angle d'inclinaison (w) compris entre 30° et 70° et de préférence entre 40° et 60°.

3. Dispositif de réglage (200) selon la revendication 1 ou 2, **caractérisé en ce que** les guides (130a, 130b) sont conçus, dans la zone supérieure, avec les biseaux d'introduction (131a, 131b) à la manière de rampes et, dans la zone inférieure, avec des surfaces de guidage (132a, 132b) parallèles l'une à l'autre.

4. Dispositif de réglage (200) selon la revendication 3, **caractérisé en ce que** la hauteur (h) des surfaces de guidage (132a, 132b) sur les guides (130a, 130b) correspond sensiblement à l'épaisseur du disque excentrique (142).

5. Dispositif de réglage (200) selon l'une des revendications précédentes, **caractérisé en ce que** les branches de réception (124, 126) sont fabriquées en tôle et **en ce que** les guides (130a, 130b), y compris leurs biseaux d'introduction (131a, 131b), sont fabriqués par déformation de la tôle.

6. Dispositif de réglage (200) selon la revendication 5, **caractérisé en ce que** les guides (130a, 130b) sont fabriqués en découpant la tôle et en formant des languettes vers l'extérieur.

7. Dispositif de réglage (200) selon la revendication 5 ou 6, **caractérisé en ce que** les languettes (130a, 130b) sont conçues symétriques et pliées dans des directions opposées.

8. Dispositif de réglage (200) selon la revendication 5, 6 ou 7, **caractérisé en ce que** les languettes (130a, 130b) ont un contour en forme d'arc et notamment en forme de demi-cercle.

9. Dispositif de réglage (200) selon la revendication 5, 6, 7 ou 8, **caractérisé en ce que** les branches de réception (124, 126) sont conçues avec une épaisseur de tôle comprise entre 1,5 mm et 3,0 mm.

10. Support d'essieu (100) pour un véhicule automobile, notamment pour une voiture particulière, comprenant au moins un dispositif de réglage (200) selon l'une des revendications précédentes.
